(19) Europäisches Patentamt
European Patent Office
Office européen des brevets

(11) **EP 3 177 494 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(51) Int Cl.:
***B60T 13/58*** *(2006.01)*      ***B60T 13/74*** *(2006.01)*

(21) Anmeldenummer: **15731545.8**

(22) Anmeldetag: **18.06.2015**

(86) Internationale Anmeldenummer:
**PCT/EP2015/063690**

(87) Internationale Veröffentlichungsnummer:
**WO 2016/020095 (11.02.2016 Gazette 2016/06)**

(54) **BREMSVERFAHREN FÜR EIN KRAFTFAHRZEUG UND STEUERVORRICHTUNG FÜR EIN BREMSVERFAHREN**

BRAKING METHOD FOR A MOTOR VEHICLE AND CONTROL DEVICE FOR A BRAKING METHOD

PROCÉDÉ DE FREINAGE D'UN VÉHICULE AUTOMOBILE ET DISPOSITIF DE COMMANDE D'UN PROCÉDÉ DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2014 DE 102014215798**

(43) Veröffentlichungstag der Anmeldung:
**14.06.2017 Patentblatt 2017/24**

(73) Patentinhaber: **Robert Bosch GmbH**
**70442 Stuttgart (DE)**

(72) Erfinder:
• KUNZ, Michael
**71711 Steinheim an der Murr (DE)**
• PUTZER, Tobias
**74177 Bad Friedrichshall (DE)**

(56) Entgegenhaltungen:
**EP-A1- 1 686 029**     **CN-B- 102 390 375**
**US-A- 5 139 315**

**Beschreibung**

Die vorliegende Erfindung bezieht sich auf ein Bremsverfahren für ein Kraftfahrzeug und eine Steuervorrichtung für ein Bremsverfahren.

In den letzten Jahren wurde das Autofahren zunehmend automatisiert. Ein Teil dieser Automatisierung findet insbesondere auch im Bereich des Eingreifens bei Notsituationen statt. Dies sind z.B. Situationen, bei denen der Fahrer abgelenkt ist oder an seine fahrerischen Grenzen stößt. Hierbei wird z.B. das Fahrzeug bei einer drohenden Kollision automatisch abgebremst, um möglichst früh, möglichst viel kinetische Energie abzubauen. Zunächst wird eine Notsituation durch eine entsprechende Sensorik erkannt; die Umsetzung der Notbremsung wird dann in der Regel durch das ESP (Elektronisches Stabilitätsprogramm) übernommen, da dieses in der Lage ist, an jedem Rad des Fahrzeugs selbstständig den benötigten Bremsdruck aufzubauen.

Bei herkömmlichen Systemen werden die Fahrzeuge jedoch über die Betriebsbremse rein hydraulisch abgebremst. Um den optimalen (maximalen) Bremsdruck möglichst schnell aufzubauen, ist das Hydrauliksystem entsprechend zu dimensionieren, was hohe Kosten verursachen kann. Ein solches herkömmliches System wird in US 5,139,315 A offenbart.

Die Aufgabe der vorliegenden Erfindung ist es daher, ein Bremsverfahren und eine Steuervorrichtung für ein Bremsverfahren bereitzustellen, durch die insbesondere bei einer Notbremsung ein optimaler Bremsdruck möglichst schnell aufgebaut werden kann, wobei das System möglichst kostengünstig realisiert sein soll.

Diese Aufgabe wird durch die Merkmale der unabhängigen Patentansprüche gelöst. Weiterbildungen der Erfindung sind in den abhängigen Patentansprüchen angegeben.

Erfindungsgemäß wird ein Bremsverfahren für ein Fahrzeug mit wenigstens einem Vorderrad und wenigstens einem Hinterrad bereitgestellt, wobei an dem Vorderrad und an dem Hinterrad eine hydraulisch betätigbare Bremse und an dem Hinterrad eine automatische Parkbremse vorgesehen ist, wobei in einem ersten Schritt einer Auslösephase des Bremsverfahrens an dem Vorderrad eine Bremskraft mittels eines hydraulischen Bremsdruck anliegend an der hydraulisch betätigbaren Bremse erzeugt wird und an dem Hinterrad eine Bremskraft ausschließlich mittels eines elektrischen Aktors der automatischen Parkbremse erzeugt wird. Hierunter ist zu verstehen, dass das Hinterrad nur mittels der Parkbremse gebremst wird. Ein hydraulischer Bremsdruckaufbau ist in diesem Schritt nicht vorgesehen. Das gesamte Potential zum Aufbau eines hydraulischen Bremsdrucks (insbesondere eine Pumpleistung des ESP-System) kann daher für eine Bremskrafterzeugung am Vorderrad genutzt werden. Ergänzend sei erwähnt, dass selbstverständlich auch mehrere Vorderräder, insbesondere zwei Vorderräder, und/oder mehrerer Hinterräder, insbesondere zwei Hinterräder, bei dem Fahrzeug vorliegen können. Entsprechend werden erfindungsgemäß in einem ersten Schritt der Auslösephase die Hinterräder - bzw. die Hinterachse - ausschließlich mittels der Parkbremse gebremst sowie das gesamte Potential zum Aufbau eines hydraulischen Bremsdrucks an den Vorderrädern - bzw. der Vorderachse - genutzt. Hierbei kann jedes Rad mit einer eigenen hydraulisch betätigbaren Bremse ausgestattet sein.

Unter Erzeugung einer Bremskraft wird sowohl der Aufbau als auch das Halten sowie die Variation, bzw. Modulation der Bremskraft verstanden. Im Fall einer Betätigung einer hydraulisch betätigbaren Bremse mittels einem hydraulischen Bremsdruck, insbesondere im Rahmen einer Erzeugung einer Bremskraft, kann auch von einer hydraulisch betätigten Bremse gesprochen werden.

Die die gesamte Pumpleistung kann daher ausschließlich zur Erzeugung einer Bremskraft an dem Vorderrad (bzw. den Vorderrädern oder Vorderachse) verwendet werden. Hierbei ist anzumerken, dass das Vorderrad (bzw. die Vorderrädern oder Vorderachse) von großer Bedeutung für die Verzögerung der Fahrzeuglängsbewegung in Vorwärtsfahrt ist und einen wesentlichen Beitrag zum Verzögerungspotential darstellt. Weiterhin kann durch das hydraulische System ein sehr hoher Druck aufgebaut werden. Automatisierte Bremseingriffe z.B. in Notsituationen (Notbremsung) können auf diese Weise deutlich schneller realisiert werden. Ebenfalls wird das gesamte Bremspotential erhöht, da ein zweiter unabhängiger Aktuator (automatische Parkbremse) die Bremsregeleingriffe unterstützt. Auf diese Weise wird die Sicherheit des automatischen Bremseingriffs erhöht.

Für Fahrzeuge mit ausreichend hoher Leistungsfähigkeit bezüglich des Hydrauliksystems (Bremssystems), können die Systemkosten gesenkt werden. Beispielsweise kann die hydraulische Leistungsfähigkeit reduziert werden, was eine Kostenersparnis mit sich bringt. Diese Vorteile werden insbesondere dadurch erreicht, dass der zweite unabhängige Aktuator verwendet wird, um den hydraulischen Aktuator (ESP) zu unterstützen.

Vorteilhafterweise wird in einem nachgelagerten zweiten Schritt der Auslösephase des Bremsverfahrens zur Erzeugung einer Bremskraft zusätzlich ein hydraulischer Bremsdruck an der hydraulisch betätigbaren Bremse des Hinterrads aufgebaut, sobald an der hydraulisch betätigbaren Bremse des Vorderrads ein definierter Bremsdruck erreicht wurde. Ein Bremsdruck kann dabei vorteilhaft dadurch definiert sein, dass bei diesem Druck die hydraulisch betätigbare Bremse des Vorderrads in eine ABS-Regelung übergeht.

Vorteilhafterweise wird in einem weiteren nachgelagerten dritten Schritt der Auslösephase des Bremsverfahrens die Bremskraft an dem Vorderrad und die Bremskraft an dem Hinterrad ausschließlich mittels einem hydraulischen Bremsdruck bei den hydraulisch betätigbaren Bremsen erzeugt wird, sobald bei der hydraulisch betätigbaren Bremse des Hinterrads ein definierter Bremsdruck erreicht wurde. Ein Bremsdruck dann dabei vorteilhaft dadurch definiert sein, dass der aufgebaute Bremsdruck groß genug ist eine benötigte Bremskraft des Hinterrads alleine bereitzustellen.

Mittels der drei Schritte der Auslösephase des Bremssystems wird die Bremsung vorteilhafterweise schrittweise an das hydraulische Bremssystem übergeben. Dies ermöglicht eine Fokussierung des hydraulischen Bremssystems, das heißt des erzeugbaren Druckpotentials, auf die Vorderräder für den ersten Schritt der Auslösephase. Hierdurch wird insbesondere ermöglicht, den hydraulischen Bremsdruck an den Vorderrädern maximal schnell aufzubauen.

Der beschriebenen Auslösephase des Bremsverfahren, in welcher die automatisierte Bremsung ausgelöst wird, ist eine Vorbereitungsphase vorgelagert, welche insbesondere die drei Schritte "Befüllung der hydraulisch betätigbaren Bremsen mit Hydraulikfluid sowie Anlegen der Bremsbeläge an die Bremsscheiben" sowie "Transmission (d.h. Überfahren, bzw. Überwinden) eines Leerspiels und Lüftspiels der automatischen Parkbremse" und "Haltephase in welcher die angelegten Bremsbeläge und befüllten hydraulisch betätigbaren Bremsen in der aktivierten Position gehalten werden".

Vorteilhafterweise werden die Bremsbeläge der hydraulisch betätigbaren Bremsen des Vorderrads und/oder Hinterrads in einem Schritt einer der Auslösephase vorgelagerten Vorbereitungsphase des Bremsverfahrens an Bremsscheiben der hydraulisch betätigbaren Bremsen des Vorderrads und/oder Hinterrads angelegt. Hierdurch kann bei Bedarf über die hydraulischen Bremsen schnellstmöglich eine Klemmkraft zwischen den Bremsbelägen und der Bremsscheibe erzeugen werden.

Vorteilhafterweise werden in einem weiteren Schritt der Vorbereitungsphase des Bremsverfahrens ein Leerspiel und/oder ein Lüftspiel der automatischen Parkbremse überwunden, um so bei Bedarf schnellstmöglich eine Klemmkraft zwischen Bremsbelägen und einer entsprechenden Bremsscheibe erzeugen zu können.

Vorteilhafterweise werden die Bremsbeläge derart an die Bremsscheiben angelegt, dass dadurch im Wesentlichen keine Bremskraft aufgeprägt wird oder eine dabei aufgeprägte Bremskraft so gering wie möglich ist, um kein vorzeitiges, das heißt ungewolltes oder/und unkontrolliertes Abbremsen des Fahrzeugs zu erzeugen.

Der beschriebenen Auslösephase des Bremsverfahren, in welcher die automatisierte Bremsung ausgelöst wird, ist eine Abschlussphase nachgelagert.

Vorteilhafterweise werden in der nachgelagerten Abschlussphase des Bremsverfahrens verschiedene Situationen unterschieden - welche zum Zeitpunkt der Abschlussphase vorliegen - und entsprechend wird das Bremsverfahren darauf eingestellt. In einer ersten Situation, insbesondere wenn das Fahrzeug steht, wird das Fahrzeug hydraulisch gehalten und nach einer definierten Zeitspanne an die automatische Parkbremse übergeben, um das Fahrzeug dauerhaft und sicher zu parken. In einer alternativen Situation, insbesondere wenn das Fahrzeug in Bewegung ist, werden die hydraulisch betätigbaren Bremsen gelöst und das Fahrzeug (d.h. die Steuerung und Kontrolle des Fahrzeugs) an den Fahrer übergeben. Dies kann bspw. bei einem Abbruch der Notbremsung durch den Fahrer erfolgen. In einer weiteren alternativen Situation, insbesondere wenn eine Kollision eingetreten ist, wird das durch die hydraulischen Bremsen gehaltene Fahrzeug an die automatische Parkbremse übergeben, um das Fahrzeug dauerhaft sicher im Stillstand zu halten.

Vorteilhafterweise erfolgt die Bremskrafterzeugung im Rahmen des Bremsverfahren automatisiert, um unabhängig von einem Eingriff des Fahrzeugführers eine Bremkrafterzeugung zu ermöglichen.

Vorteilhafterweise ist das Bremsverfahren ein Notbremsverfahren, das eingeleitet wird, sobald in einer Erkennungsphase des Bremsverfahrens vorbestimmte Indikatoren für eine Notbremssituation vorliegen und/oder erkannt werden. Die Erkennungsphase ist hierbei der Vorbereitungsphase vorteilhaft vorgelagert.

Vorteilhafterweise wird das Bremsverfahren bei einem Fahrzeug eingesetzt, welches in Bewegung ist, insbesondere einem Fahrzeug welches in Betrieb durch einen Fahrzeugführer ist.

Ferner ist ein Steuergerät vorgesehen, welches ausgebildet ist und Mittel aufweist das beschriebene Verfahren durchzuführen. Weiterhin wird eine entsprechende automatische Parkbremse bereitgestellt, die vorteilhafterweise ein "motor on caliper" Bremssystem ist.

Weitere Merkmale und Zweckmäßigkeit der Erfindung ergeben sich aus der Beschreibung von Ausführungsbeispielen anhand der beigefügten Figuren.

Von den Figuren zeigt:

Fig. 1 eine schematische Schnittansicht einer automatischen Parkbremse in "motor on caliper" Bauweise;

Fig. 2 einen typischen Verlauf einer Druck-/Volumen-Kennlinie (Radbremse);

Fig. 3 die Verläufe von Motorstrom und Klemmkraft über die Zeit; und

Fig. 4 einen Klemmkraftverlauf einer automatischen Parkbremse sowie den Bremsdruck (ESP) an den Rädern der Vorder- bzw. Hinterachse gemäß einer Ausführungsform der Erfindung.

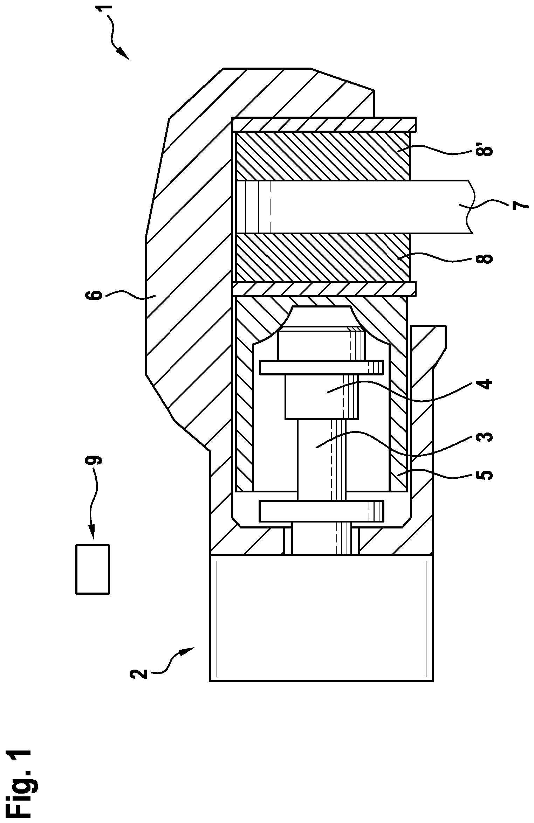

Fig. 1 zeigt eine schematische Schnittansicht einer automatischen (automatisierten) Parkbremse (Feststellbremse) 1 für ein Fahrzeug, die mittels eines Aktuators 2 (Bremsmotor), der vorliegend als Gleichstrommotor ausgebildet ist, eine Klemmkraft zum Festsetzen des Fahrzeugs ausüben kann. Der Aktuator 2 treibt eine in einer axialen Richtung gelagerte Spindel 3, insbesondere eine Gewindespindel 3, an. An ihrem dem Aktuator 2 abgewandten Ende ist die Spindel 3 mit einer Spindelmutter 4 versehen, die im zugespannten Zustand der automatischen Parkbremse 1 an einer inneren Stirnseite bzw. an einer Rückseite eines Bremskolbens 5 anliegt. Die Spindelmutter 4 wird bei einer Drehbewegung des Aktuators 2 und einer resultierenden Drehbewegung der Spindel 3 in der axialen Richtung verschoben. Die Spindelmutter 4 und der Bremskolben 5 sind in einem Bremssattel 6 gelagert, der eine Bremsscheibe 7 zangenartig übergreift. Zu beiden Seiten der Bremsscheibe 7 ist jeweils ein Bremsbelag 8, 8' angeordnet. Im Fall eines Zuspannvorgangs der automatischen Parkbremse 1 dreht sich der Elektromotor (Aktuator 2), woraufhin die Spindelmutter 4 sowie der Bremskolben 5 in der axialen Richtung auf die Bremsscheibe 7 zubewegt werden, um so eine vorbestimmte Klemmkraft zwischen den Bremsbelägen 8, 8' und der Bremsscheibe 7 zu erzeugen. Die automatische Parkbremse 1 ist z.B. als "motor on caliper" System in die Betriebsbremse integriert; bei einer Betriebsbremsung wird die vorbestimmte Klemmkraft zwischen den Bremsbelägen 8, 8' und der Bremsscheibe 7 hydraulisch aufgebaut.

Die Ansteuerung des Aktuators 2 erfolgt mittels Steuereinheit 9, bei der es sich beispielsweise um ein Steuergerät eines Fahrdynamiksystems, wie ABS (Antiblockiersystem), ESP (elektronisches Stabilitätsprogramm) oder ein sonstiges Steuergerät, bspw. einer EHB (elektrohydraulische Bremse), handeln kann.

Im Folgenden wird mit Bezug auf die Figuren eine Ausführungsform der vorliegenden Erfindung beschrieben.

Gemäß der vorliegenden Erfindung wird insbesondere bei einer Notbremsung bzw. dem automatisierten Eingreifen in einer Notsituation, eine Bremskraft an den Bremsen einer Vorderachse bzw. den Vorderrädern eines Fahrzeugs zunächst rein hydraulisch, insbesondere durch das ESP, aufgebaut. Die Bremskrafterzeugung an den Bremsen einer Hinterachse bzw. den Hinterrädern des Fahrzeugs wird zunächst durch die automatische Parkbremse 1 übernommen, d.h. durch einen Aktor der automatischen Parkbremse elektromechanisch erzeugt. Durch diesen Systemverbund von ESP und der automatischen Parkbremse 1 wird ein Leistungsgewinn erzielt, da beide Systeme, auch unabhängig von einander, in der Lage sind, ein Bremsmoment aufzubauen das zu einer Fahrzeugverzögerung führt. Durch das ESP wird ein hydraulischer Bremsdruck aufgebaut und durch die automatische Parkbremse 1 wird eine Klemmkraft erzeugt, die zwischen den Bremsbelägen 8, 8' und der Bremsscheibe 7 der entsprechenden Bremse wirkt.

Durch eine geeignete Ventilsteuerung kann die gesamte Förderleistung einer Hydraulikpumpe des ESP für den Bremsdruckaufbau an den Bremsen der Vorderachse verwendet werden. Auf diese Weise ist ein sehr schneller Bremsdruckaufbau an den Bremsen der Vorderachse erreichbar. Die hydraulische Klemmkraft $F_{klemm, \, hyd}$, die an einem Rad bzw. zwischen den entsprechenden Reibbelägen 8, 8' und der Bremsscheibe 7 wirkt, kann durch die folgende Gleichung berechnet werden:

$$F_{klemm, \, hyd} = p_{Rad} * A_K,$$

wobei $p_{Rad}$ der hydraulische Radbremsdruck und $A_K$ die Kolbenfläche des Bremskolbens 5 ist.

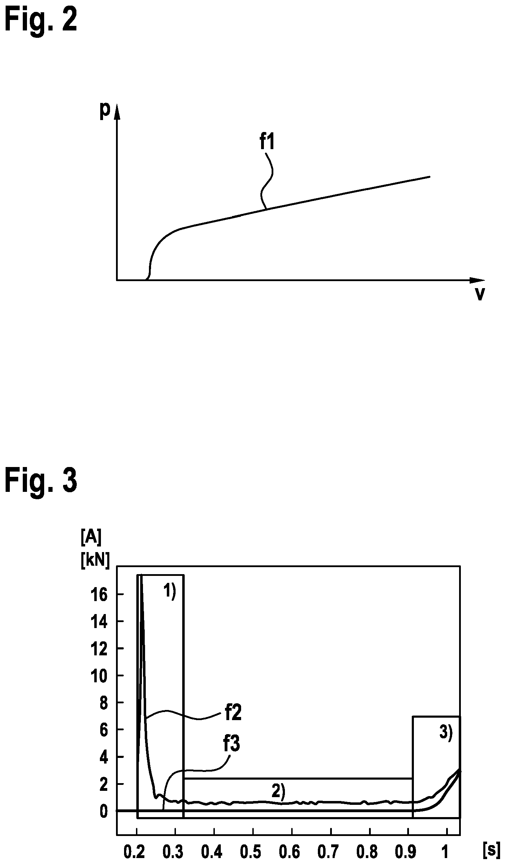

Aus dem Druck-Volumen-Diagramm in Fig. 2 ist zu sehen, dass, je mehr Volumen (Bremsflüssigkeit) pro Zeiteinheit in die Bremsen der Vorderachse gefördert wird, desto schneller der Bremsdruck aufgebaut werden kann. Eine Funktion f1 in dem Diagramm steigt daher zunächst degressiv an und geht dann in eine linear ansteigende Funktion über. Die Vorderachse des Fahrzeugs ist für die Verzögerung des Fahrzeugs in Vorwärtsfahrt von großer Bedeutung, da durch die dynamische Radlastverteilung mittels der Vorderachse wesentlich höhere Bremskräfte übertragen werden können als mit der Hinterachse.

Um eine optimierte Leistungsfähigkeit des Systems nutzen zu können, muss eine sinnvolle Abfolge der Aktuatorfunktionen eingehalten werden, das heißt es muss eine abgestimmte Ansteuerung der Aktoren (Hydraulikpumpe des ESP, Aktuator 2 der automatischen Parkbremse 1) erfolgen, da beide Bremssysteme in den einzelnen Betriebspunkten Vor- und Nachteile aufweisen.

In Fig. 3 ist ein Motorstromverlauf (Funktion f2; Einheit: Ampere [A]) und ein Klemmkraftverlauf (Funktion f3, Einheit: Kilonewton [kN]) der automatischen Parkbremse 1 dargestellt. Im Bereich 1) wird der Aktuator 2 der automatischen Parkbremse 1 bestromt und dieser beginnt sich zu drehen und die Spindel 3 anzutreiben. Aus diesem Grund ist hier bei der Funktion f2 eine Spitze zu erkennen (über 16 Ampere). Eine Klemmkraft ist hier noch nicht vorhanden, weshalb die Funktion f3 in diesem Bereich den Wert Null hat. Im Bereich 2) werden der Leerweg bzw. das Lüftspiel der automatischen Parkbremse 1 überwunden. Als Leerweg wird der Abstand bezeichnet, den die Spindelmutter 4 durch die Rotation der Spindel 3 überwinden muss, um in Kontakt mit dem Bremskolben 5 zu gelangen. Als Lüftspiel wird der Abstand zwischen den Bremsbelägen 8, 8' und der Bremsscheibe 7 bei Scheibenbremsanlagen von Kraftfahrzeugen genannt. Dieser Vorgang dauert in Bezug auf die Gesamtansteuerung der automatischen Parkbremse 1 (Bereiche 1) bis 3)) in der Regel relativ lang. Am Ende von Bereich 2) bzw. in Bereich 3) sind die Bremsbeläge 8, 8' an die Bremsscheibe 7 angelegt und der Kraftaufbau beginnt, wodurch sowohl die Funktion f2 des Motorstroms als auch die Funktion f3 der Klemmkraft ansteigt.

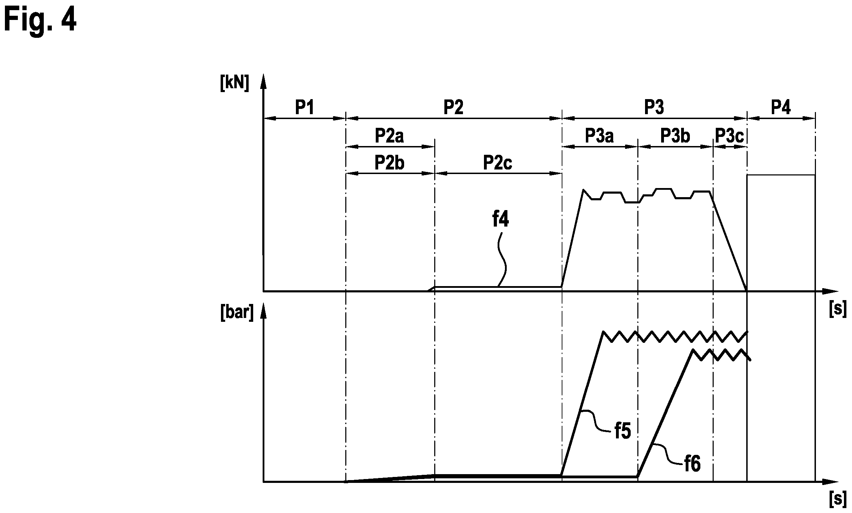

Ein Ablauf einer Notbremsung mit Unterstützung der automatischen Parkbremse 1 ist in Fig. 4 dargestellt und wird nachfolgend im Detail beschrieben.

In Fig. 4 ist eine Klemmkraft (Funktion f4; Einheit: Kilonewton [kN]) der automatischen Parkbremse 1 (oben) und ein Bremsdruck (ESP) an der Vorderachse (Funktion f5; Einheit: Bar [bar]) bzw. der Hinterachse (Funktion f6; Einheit: Bar [bar]) (unten) über die Zeit [s] aufgetragen. Die jeweiligen Ordinaten der beiden Diagramme in Fig. 4 sowie die vertikal gestrichelten Linien kennzeichnen jeweils den Beginn der einzelnen im Folgenden beschriebenen Phasen bzw. Verfahrensschritte. Zunächst ist eine Erkennungsphase P1 des Bremsverfahrens (auch Beobachtungsphase genannt) dargestellt. In einer Erkennungsphase sind entsprechenden Indikatoren für eine Notbremssituation vorhanden, bzw. werden erkannt. Eine derartige Notbremssituation ist beispielsweise vorhanden, wenn sich das Fahrzeug auf einem Kollisionskurs mit einem Hindernis befindet, jedoch keine Reaktion des Fahrers erfolgt. In der Erkennungsphase P1 hat der Fahrer jedoch noch Zeit selbstständig auf die Situation - d.h. ohne einen automatisierten Systemeingriff - zu reagieren. Die Situationserkennung erfolgt mittels der marktüblichen Verfahren (Abstandsmessung, etc.) und wird deshalb hier nicht weiter vertieft.

In einer Vorbereitungsphase P2 des Bremsverfahrens wird ein möglicher Eingriff (Notbremseingriff) vorbereitet. Hierfür werden die entsprechenden Aktuatoren, also der Aktuator 2 der automatischen Parkbremse 1 sowie der oder die entsprechenden Aktuatoren, bspw. Druckpumpe für hydraulischen Druck, aber auch die Ventilsteuerung und Ventile des Hydrauliksystems (ESP) vorbereitet. Die Vorbereitungsphase P2 unterteilt sich in die Schritte (alternativ auch als Phasen bezeichnet) P2a, P2b und P2c.

In dem Schritt P2a werden an den Bremsen der Vorder- und Hinterachse des Fahrzeugs die Bremsbeläge 8, 8' durch eine Vorbefüllung der jeweiligen Bremse mittels der Hydraulik (z.B. ESP) an die jeweilige Bremsscheibe 7 angelegt. Dies geschieht durch den Aufbau eines geringen hydraulischen Drucks. Wenn die Bremsbeläge an die Bremsscheibe angelegt sind, endet der Schritt P2a. Eine auf die Bremsscheibe aufgeprägte Bremskraft soll dabei möglichst gering bleiben. Durch die angelegten Bremsbeläge an die Bremsscheibe kann mittels einem weiteren hydraulischen Druckaufbau im Bedarfsfall sofort eine Bremskraft aufbauen kann.

In dem Schritt P2b wird der Leerweg der automatischen Parkbremse 1 überwunden, d.h. die Spindelmutter 4 wird durch die Rotation der Spindel 3 bzw. des Aktuators 2 in Richtung der Bremsscheibe 7 verlagert, um so die Spindelmutter 4 in Kontakt mit dem Bremskolben 5 zu bringen, so dass auch der Aktuator 2 der automatischen Parkbremse 1 im Bedarfsfall sofort eine Bremskraft aufbauen kann. In Fig. 4 endet der Schritt P2b zeitgleich mit dem Schritt P2b. Alternativ kann der Schritt P2b auch zu einem anderen, insbesondere späteren, Zeitpunkt beendet sein.

In dem Schritt P2c sind nun sämtliche Bremsbeläge 8, 8' angelegt und sämtliche Bremsen können bei einer folgenden Ansteuerung sofort eine Bremskraft an dem entsprechenden Rad aufbauen. In dieser Definition beginnt Schritt P2c mit einem Abschuss des später endenden Schritts P2a oder P2b. Selbstverständlich ist bspw. bei einem früheren Ende des Schritts P2b bereits zu diesem Zeitpunkt bei einer weiteren Ansteuerung mittels der Betriebsbremse ein Bremskraftaufbau möglich. Beim Anlegen der Bremsbeläge 8, 8' ist es wichtig, dass die dabei aufgeprägte Bremskraft so gering wie möglich eingestellt wird, insbesondere keine Bremskraft erzeugt wird, um keinen ungewünschten verfrühten Bremseffekt zu produzieren. Im oberen Diagramm in Fig. 4 ist zu sehen, dass die Klemmkraft der automatischen Parkbremse 1 bis Beginn des Schritts P2c im Wesentlichen Null ist, da hier der Leerweg bzw. das Lüftspiel überwunden wird. Ab Beginn des Schritts P2c ist bei der Funktion f4 dann ein minimaler Anstieg der Klemmkraft zu erkennen, was das Anlegen der Bremsbeläge 8, 8' an die Bremsscheibe 7 anzeigt.

Im unteren Schaubild in Fig. 4 ist zu sehen, dass hier der Hydraulikdruck an den Bremsen der Vorder- bzw. Hinterachse linear minimal aufgebaut wird, um dann bis zu Beginn der Auslösephase P3 konstant zu bleiben. Durch das Anlegen sämtlicher Bremsbeläge 8, 8' an die entsprechenden Bremsscheiben 7 kann so im Ernstfall unmittelbar ein Bremsmoment an allen Rädern des Fahrzeugs aufgebaut werden.

Zu Beginn der Auslösephase P3 des Bremsverfahrens steht beispielsweise eine Kollision unmittelbar bevor; der Zeitpunkt um automatisiert (durch eine geeignete Steuereinheit) in den Bremsprozess einzugreifen, ist somit erreicht. Die automatische Parkbremse 1 (an der Hinterachse) und das ESP (an der Vorderachse) bauen so schnell wie möglich eine Bremskraft auf. Bei einem entsprechenden Voraussetzungen geht das ESP in eine ABS-Regelung über. Ebenfalls geht die automatische Parkbremse beim Vorliegen entsprechender Voraussetzungen in eine ABS-Regelung über. Sobald an den Bremsen der Vorderachse in die ABS-Regelung übergegangen wird, wird an den Bremsen der Hinterachse zusätzlich ein hydraulischer Bremsdruck aufgebaut (Schritt P3a). Sobald der hydraulische Bremsdruck der Hinterräder hoch genug ist, um die Bremsung der Hinterräder zu übernehmen, wird die automatische Parkbremse 1 wieder geöffnet (Schritt P3b) und die gesamte Bremsung wird ab jetzt rein hydraulisch durchgeführt.

Sobald in eine ABS Regelung übergegangen wird, ergibt sich beispielsweise bei den Betriebsbremsen (hydraulische Bremsen) eine Modulation des hydraulischen Drucks, welche bei den Funktionen f5 und f6 durch das typische alternierende Ansteigen und Absinken des entsprechenden Bremsdrucks dargestellt ist. Durch das Absinken des Bremsdrucks wird einem Blockieren der Räder entgegengewirkt. Auch bei der Funktion f4 ist ein alternierender Verlauf erkennbar, da auch hier elektronisch einem Blockieren der Räder entgegengewirkt wird.

Die Auslösephase (P3) geht in eine Abschlussphase (P4) über, wenn die Notbremsung vollständig ausgeführt oder beendet wurde. Im Anschluss an eine vollständige Ausführung der automatisierten Bremsung und stehendem Fahrzeug, kann das Fahrzeug hydraulisch gehalten werden und nach einer definierten Zeitspanne kann die automatische Parkbremse 1 aktiviert werden, um das Fahrzeug dauerhaft sicher zu halten. Wenn das Fahrzeug noch fährt, beispielsweise weil die Notbremsung abgebrochen wurde (z.B. für den Fall, dass das Hindernis verschwindet oder aufgrund eines Übergabebefehls durch den Fahrer), können die Bremsen an den vier Rädern gelöst werden und das Fahrzeug kann an den Fahrer übergeben werden. Sollte das Fahrzeug mit einem Hindernis kollidieren, kann an die automatische Parkbremse 1 übergeben werden, um das Fahrzeug sicher im Stillstand zu halten.

Durch das erfindungsgemäße System insbesondere durch die Symbiose der beiden Bremssysteme kann die Druckaufbaudynamik an der Vorder- und der Hinterachse gesteigert werden.

**Patentansprüche**

1. Bremsverfahren für ein Fahrzeug mit wenigstens einem Vorderrad und wenigstens einem Hinterrad, wobei an dem Vorderrad und an dem Hinterrad eine hydraulisch betätigbare Bremse und an dem Hinterrad eine automatische Parkbremse (1) vorgesehen ist, wobei in einem ersten Schritt (P3a) einer Auslösephase (P3) des Bremsverfahrens an dem Vorderrad eine Bremskraft mittels eines hydraulischen Bremsdruck der hydraulisch betätigbaren Bremse erzeugt wird, **dadurch gekennzeichnet, dass**

   - in dem ersten Schritt (P3a) der Auslösephase (P3) des Bremsverfahrens an dem Hinterrad eine Bremskraft ausschließlich mittels eines elektrischen Aktors der automatischen Parkbremse erzeugt wird.

2. Bremsverfahren gemäß Anspruch 1, wobei in einem nachgelagerten zweiten Schritt (P3b) der Auslösephase (P3) des Bremsverfahrens zur Erzeugung einer Bremskraft zusätzlich ein hydraulischer Bremsdruck an der hydraulisch betätigbaren Bremse des Hinterrads aufgebaut wird, sobald an der hydraulisch betätigbaren Bremse des Vorderrads ein definierter Bremsdruck erreicht wurde, insbesondere wenn die hydraulisch betätigbare Bremse des Vorderrads in eine ABS-Regelung übergeht.

3. Bremsverfahren gemäß Anspruch 2, wobei in einem nachgelagerten dritten Schritt (P3c) der Auslösephase (P3) des Bremsverfahrens die Bremskraft an dem Vorderrad und die Bremskraft an dem Hinterrad ausschließlich mittels einem hydraulischen Bremsdruck bei den hydraulisch betätigbaren Bremsen erzeugt wird, sobald bei der hydraulisch betätigbaren Bremse des Hinterrads ein definierter Bremsdruck erreicht wurde, insbesondere der aufgebaute Bremsdruck groß genug ist eine benötigte Bremskraft des Hinterrads alleine bereitzustellen.

4. Bremsverfahren gemäß einem der Ansprüche 1 bis 3, wobei Bremsbeläge (8, 8') der hydraulisch betätigbaren Bremsen des Vorderrads und/oder Hinterrads in einem Schritt (P2a) einer vorgelagerten Vorbereitungsphase (P2) des Bremsverfahrens an Bremsscheiben (7) der hydraulisch betätigbaren Bremsen des Vorderrads und/oder Hinterrads angelegt werden.

5. Bremsverfahren gemäß Anspruch 4, wobei in einem weiteren Schritt (P2b) der Vorbereitungsphase (P2) des Bremsverfahrens ein Leerspiel und ein Lüftspiel der automatischen Parkbremse (1) überwunden werden.

6. Bremsverfahren gemäß Anspruch 4 oder Anspruch 5, wobei die Bremsbeläge (8, 8') derart an die Bremsscheiben (7) angelegt werden, dass dadurch im Wesentlichen keine Bremskraft aufgeprägt wird oder eine dabei aufgeprägte Bremskraft so gering wie möglich ist.

7. Bremsverfahren gemäß einem der Ansprüche 1 bis 3, wobei in einer nachgelagerten Abschlussphase (P4) des Bremsverfahrens verschiedene Situationen unterschieden werden, wobei das Fahrzeug hydraulisch gehalten wird und nach einer definierten Zeitspanne an die automatische Parkbremse übergeben wird, um das Fahrzeug dauerhaft und sicher zu parken, wenn das Fahrzeug steht oder die hydraulisch betätigbaren Bremsen gelöst werden und das Fahrzeug an den Fahrer übergeben wird, wenn das Fahrzeug fährt, insbesondere bei einem Abbruch der Notbremsung, oder das Fahrzeug an die automatische Parkbremse übergeben wird, um das Fahrzeug sicher im Stillstand zu halten, wenn eine Kollision eingetreten ist.

8. Bremsverfahren gemäß einem der Ansprüche 1 bis 3, wobei die Bremskrafterzeugung automatisiert erfolgt.

9. Bremsverfahren gemäß einem der Ansprüche 1 bis 8, wobei das Bremsverfahren ein Notbremsverfahren ist, das eingeleitet wird, sobald in einer Erkennungsphase (P1) des Bremsverfahrens vorbestimmte Indikatoren für eine Notbremssituation vorliegen und/oder erkannt werden.

10. Steuergerät eingerichtet zur Durchführung des Verfahrens gemäß einem der Ansprüche 1 bis 9.

**11.** Automatische Parkbremse (1) mit einem Steuergerät gemäß Anspruch 10.

**12.** Automatische Parkbremse (1) gemäß Anspruch 11, wobei die automatische Parkbremse (1) ein "motor on caliper" Bremssystem ist.

**Claims**

**1.** Braking method for a vehicle comprising at least one front wheel and at least one rear wheel, wherein a hydraulically actuatable brake is provided at the front wheel and at the rear wheel and an automatic parking brake (1) is provided at the rear wheel, wherein, in a first step (P3a) of an initiation phase (P3) of the braking method, a braking force is generated at the front wheel by means of a hydraulic brake pressure of the hydraulically actuatable brake, **characterized in that**,

- in the first step (P3a) of the initiation phase (P3) of the braking method, a braking force is generated at the rear wheel exclusively by means of an electrical actuator of the automatic parking brake.

**2.** Braking method according to Claim 1, wherein, in a subsequent, second step (P3b) of the initiation phase (P3) of the braking method for generating a braking force, a hydraulic brake pressure is additionally built up at the hydraulically actuatable brake at the rear wheel as soon as a defined brake pressure has been reached at the hydraulically actuatable brake at the front wheel, in particular if the hydraulically actuatable brake at the front wheel transitions into ABS control.

**3.** Braking method according to Claim 2, wherein, in a subsequent, third step (P3c) of the initiation phase (P3) of the braking method, the braking force at the front wheel and the braking force at the rear wheel are generated exclusively by means of a hydraulic brake pressure in the hydraulically actuatable brakes as soon as a defined brake pressure has been reached in the hydraulically actuatable brake at the rear wheel,
in particular, the built-up brake pressure is great enough on its own to provide a required braking force at the rear wheel.

**4.** Braking method according to any one of Claims 1 to 3, wherein, in a step (P2a) of a preceding preparation phase (P2) of the braking method, brake pads (8, 8') of the hydraulically actuatable brakes at the front wheel and/or rear wheel are placed against brake disks (7) of the hydraulically actuatable brakes at the front wheel and/or rear wheel.

**5.** Braking method according to Claim 4, wherein, in a further step (P2b) of the preparation phase (P2) of the braking method, play and clearance of the automatic parking brake (1) are overcome.

**6.** Braking method according to Claim 4 or Claim 5, wherein the brake pads (8, 8') are placed against the brake disks (7) in such a way that, as a result, substantially no braking force is applied, or a braking force which is applied is as low as possible.

**7.** Braking method according to any one of Claims 1 to 3, wherein, in a subsequent completion phase (P4) of the braking method, a distinction is made between different situations, wherein
the vehicle is held in place hydraulically and, after a defined period of time, is handed over to the automatic parking brake, in order to continuously and reliably park the vehicle, when the vehicle is at a standstill, or the hydraulically actuatable brakes are released and the vehicle is handed over to the driver if the vehicle is traveling, in particular in the event of a termination of the emergency braking, or
the vehicle is handed over to the automatic parking brake, in order to reliably hold the vehicle at a standstill, if a collision has occurred.

**8.** Braking method according to any one of Claims 1 to 3, wherein the generation of braking force takes place in an automated way.

**9.** Braking method according to any one of Claims 1 to 8, wherein the braking method is an emergency braking method which is initiated as soon as predetermined indicators for an emergency braking situation are present and/or detected in a detection phase (PI) of the braking method.

**10.** Control unit configured for carrying out the method according to any one of Claims 1 to 9.

**11.** Automatic parking brake (1) comprising a control unit according to Claim 10.

**12.** Automatic parking brake (1) according to Claim 11, wherein the automatic parking brake (1) is a "motor on calliper" braking system.

**Revendications**

**1.** Procédé de freinage d'un véhicule automobile comportant au moins une roue avant et au moins une roue arrière, dans lequel un frein pouvant être actionné de manière hydraulique est prévu au niveau de la roue avant et au niveau de la roue arrière et un frein de stationnement (1) automatique est prévu au niveau de la roue arrière, dans lequel

dans une première étape (P3a) d'une phase de déclenchement (P3) du procédé de freinage, une force de freinage est générée au niveau de la roue avant au moyen d'une pression de freinage hydraulique du frein pouvant être actionné de manière hydraulique, **caractérisé en ce que**

- dans la première étape (P3a) de la phase de déclenchement (P3) du procédé de freinage, une force de freinage est générée au niveau de la roue arrière exclusivement au moyen d'un actionneur électrique du frein de stationnement automatique.

2. Procédé de freinage selon la revendication 1, dans lequel dans une deuxième étape (P3b) subséquente de la phase de déclenchement (P3) du procédé de freinage, une pression de freinage hydraulique est établie au niveau du frein pouvant être actionné de manière hydraulique de la roue arrière en outre pour la génération d'une force de freinage dès qu'une pression de freinage définie a été atteinte au niveau du frein pouvant être actionné de manière hydraulique de la roue avant, en particulier lorsque le frein pouvant être actionné de manière hydraulique de la roue avant passe à une régulation ABS.

3. Procédé de freinage selon la revendication 2, dans lequel dans une troisième étape (P3c) subséquente de la phase de déclenchement (P3) du procédé de freinage, la force de freinage au niveau de la roue avant et la force de freinage niveau de la roue arrière sont générées exclusivement au moyen d'une pression de freinage hydraulique dans les freins pouvant être actionnés de manière hydraulique dès qu'une pression de freinage définie a été atteinte dans le frein pouvant être actionné de manière hydraulique de la roue arrière, en particulier la pression de freinage établie est suffisamment grande pour produire à elle seule une force de freinage requise de la roue arrière.

4. Procédé de freinage selon l'une des revendications 1 à 3, dans lequel des garnitures de freins (8, 8') des freins pouvant être actionnés de manière hydraulique de la roue avant et/ou de la roue arrière sont, dans une étape (P2a) d'une phase de préparation (P2) antérieure du procédé de freinage, appliquées contre des disques de frein (7) des freins pouvant être actionnés de manière hydraulique de la roue avant et/ou de la roue arrière.

5. Procédé de freinage selon la revendication 4, dans lequel dans une autre étape (P2b) de la phase de préparation (P2) du procédé de freinage, un jeu et une course libre du frein de stationnement (1) automatique sont surmontés.

6. Procédé de freinage selon la revendication 4 ou la revendication 5, dans lequel les garnitures de freins (8, 8') sont appliquées contre les disques de frein (7) de telle sorte qu'aucune force de freinage ne soit sensiblement appliquée ou qu'une force de freinage ainsi appliquée soit aussi petite que possible.

7. Procédé de freinage selon l'une des revendications 1 à 3, dans lequel dans une phase finale (P4) subséquente du procédé de freinage, différentes situations sont distinguées, dans lequel
le véhicule est maintenu en place de manière hydraulique et après une durée définie passe au frein de stationnement automatique, afin de garer le véhicule de manière durable et sûre lorsque le véhicule est à l'arrêt ou
les freins pouvant être actionnés de manière hydraulique sont desserrés et le véhicule est confié au conducteur si le véhicule roule, en particulier en cas d'interruption du freinage de secours, ou
le véhicule passe au frein de stationnement automatique afin de maintenir le véhicule à l'arrêt de manière sûre si une collision a eu lieu.

8. Procédé de freinage selon l'une des revendications 1 à 3, dans lequel la génération de force de freinage s'effectue de manière automatisée.

9. Procédé de freinage selon l'une des revendications 1 à 8, le procédé de freinage étant un procédé de freinage de secours qui est initié dès que, dans une phase de détection (P1) du procédé de freinage, des indicateurs prédéterminés d'une situation de freinage de secours sont présents et/ou sont détectés.

10. Appareil de commande conçu pour la mise en œuvre du procédé selon l'une des revendications 1 à 9.

11. Frein de stationnement (1) automatique comportant un appareil de commande selon la revendication 10.

12. Frein de stationnement (1) automatique selon la revendication 11, le frein de stationnement (1) automatique étant un système de freinage "motor on caliper" (« moteur sur étrier »).

# Fig. 1

EP 3 177 494 B1

# Fig. 2

# Fig. 3

**Fig. 4**

EP 3 177 494 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5139315 A